# EUROPÄISCHE PATENTANMELDUNG

(11) **EP 0 591 662 A1**
(43) Veröffentlichungstag der Anmeldung: **13.04.1994**
(21) Anmeldenummer: 93113304.5
(22) Anmeldetag: 20.08.1993
(51) Int. Cl.: H02G 9/10

(54) **Vorrichtung zum Tragen von Muffen**

(30) Priorität: 07.10.1992 DE 9213501 U
(71) Anmelder: REHAU AG + Co, 95111 Rehau (DE)
(72) Erfinder: Beyer, Wolfgang, D-95111 Rehau (DE)

(57) **Zusammenfassung**

Die Erfindung betrifft eine Vorrichtung zum Tragen von Muffen für Kabel oder Leitungen. Besonders betroffen sind hier Muffen zur Verbindung von Glasfaserkabeln oder Leitungen. Hierbei sind an lotrecht angeordneten Profilschienen senkrecht davon abragende Auslegenarme befestigt, auf denen die Kabelmuffen auf wannenartigen Trageelementen abgelegt sind. Diese Trageelemente stützen sich an den Auslegerarmen ab. Die Erfindung wird darin gesehen, daß das wannenartige Trageelement (1) aus zwei gleichen Hohlkörperteilen (2, 3) aus Kunststoff besteht. Diese Hohlkörper (2, 3) sind an jeweils einem freien Ende durch axial verlaufende Mitteltrennungen (21, 31) in zwei Hohlkörperteilbereiche (22, 23, 32, 33) definierter Länge und unterschiedlichen Querschnitts geteilt. Hierbei entspricht der querschnittsgrößere Hohlkörperteilbereich (23, 33) in seinen lichten Abmessungen wenigstens den Außenabmessungen des querschnittskleineren Hohlkörperteilbereichs (22, 32). In die Mitteltrennung (21, 31) zwischen den beiden Hohlkörperteilbereichen (22, 23, 32, 33) ist eine von oben nach unten durchgehend verlaufende Schlitzöffnung (4) eingebracht. In dieser Schlitzöffnung (4) ist eine Feststellschraube (5) zur Festlegung zweier Hohlkörperteile (2, 3) aufeinander angeordnet.

## Beschreibung

Die Neuerung betrifft eine Vorrichtung zum Tragen von Muffen für Kabel oder Leitungen, insbesondere für Muffen zur Verbindung von Glasfaserkabeln oder Leitungen, wobei an lotrecht angeordneten Profilschienen senkrecht davon abragende Auslegerarme befestigt sind und wobei die Kabelmuffen auf wannenartigen Trageelementen abgelegt sind, welche sich an den Auslegerarmen abstützen.

Eine derartige Vorrichtung ist aus dem DE-U 91 12 139.6 bekannt. Die dort beschriebene Vorrichtung beschäftigt sich mit der Halterung von Installationsleitungen wie Rohre, Kabel und dergleichen Langformelementen. Es werden lotrecht angeordnete Profilschienen und rechtwinkelig davon abragende Auslegerarme beschrieben. Hierbei steht die stufenlose Verstellung der Auslegerarme in den Profilschienen im Vordergrund.

Auf solche Auslegerarme werden nach bekanntem Stand der Technik Muffentragewannen zum Lagern von beispielsweise Kabelschutzrohrmuffen aufgebracht. Solche Muffentragewannen sind in Prospektveröffentlichung der Firma Stewing Kunststoffbetrieb GmbH mit dem Titel "Muffentragewanne zum Lagern von Glasfasermuffen in Kabelschächten KNr 736350107-7 beschrieben und abgebildet.

Danach werden die Muffentragewannen durch einfaches Einhängen ihrer Tragarme in die Kabelhalterschienen in Kabelschächten eingebracht. Zum Ausgleich von Abstandtoleranzen sind in den Muffentragewannen Langlöcher angeordnet, über die die Muffentragewanne an den Auslegerarmen durch eine Verschraubung festgelegt werden kann. Die bekannten Muffentragewannen können im Rastermaß axial aneinandergereiht und durch einfaches Verschrauben zu einer längeren Kabelbahn ausgebaut werden.

Die bekannten Muffentragewannen sind aus Metall gefertigt, was sich aus Gewichtsgründen nachteilig bei der Montage auswirkt. Da die Langlöcher für die Überbrückung von Montagetoleranzen lediglich eine Bewegung von bis zu 8 mm zulassen, ist diese Überbrückungsmöglichkeit von Toleranzen doch sehr beschränkt. Für die verschiedenen Regelstützabstände bei den lotrecht in den Kabelschächten angeordneten Profilschienen von 1.000 mm bis 1.200 mm sind nach dem bekannten Stand der Technik jeweils gesonderte Muffentragewannen mit den speziellen Abmessungsbereichen zu verwenden. Dies bringt erhöhten Lageraufwand und ist damit für die Verarbeiter nachteilig.

Hier setzt die Neuerung ein, die es sich zur Aufgabe gestellt hat, eine vom Gewicht her leichte Muffentragewanne ohne Verlust von Tragekapazität anzugeben, die in der Lage ist, neben den Fertigungs- und Montagetoleranzen auch die gängigen Regelstützabstände auszugleichen. Neuerungsgemäß wird dazu vorgeschlagen, daß das wannenartige Trageelement aus zwei gleichen Hohlkörperteilen aus Kunststoff besteht, welche an jeweils einem freien Ende durch eine axial verlaufende Mitteltrennung in zwei Hohlkörperteilbereiche definierter Länge und unterschiedlichen Querschnitts geteilt sind, daß der querschnittsgrößere Teilbereich in seinen lichten Abmessungen wenigstens den Außenabmessungen des querschnittskleineren Hohlkörperteilbereichs entspricht und daß in die Mitteltrennung zwischen den beiden Hohlkörperteilbereichen eine von oben nach unten durchgehend verlaufende Schlitzöffnung eingebracht ist, in welcher eine Feststellschraube zur Festlegung zweier Hohlkörperteile aufeinander angeordnet ist.

Das neuerungsgemäße wannenartige Trageelement besteht aus zwei identischen Formteilen, die beispielsweise im Blasformprozeß hergestellt werden können. Das Trageelement ist aus zwei Hohlkörperteilbereichen zusammengesetzt, deren Enden ineinandergesteckt werden können. Die beiden Hohlkörperteilbereiche sind durch die axial verlaufende Mitteltrennung voneinander getrennt, in welche die längsverlaufende Schlitzöffnung eingebracht ist. Von der axial verlaufenden Mitteltrennung erstrecken sich links und rechts die Teilbereiche mit unterschiedlichen Querschnittsöffnungen, wobei der querschnittsgrößere Teilbereich in seinen lichten Abmessungen den querschnittskleineren Teilbereich des anzuschließenden Hohlkörperteils aufnimmt. Da die Hohlkörperteile identisch sind, kann jeweils der querschnittskleinere Hohlkörperteilbereich des einen Hohlkörperteils in die lichte Öffnung des querschnittsgrößeren Hohlkörperteilbereichs des anderen Hohlkörperteils eingeschoben werden.

In Abhängigkeit der Einstecktiefe kann durch die beiden Hohlkörperteile eine in großem Umfang längs verstellbare Muffentragewanne hergestellt werden. Es lassen sich die verschiedenen Regelbaulängen der Profilschienen von 1.000, 1.100 und 1.200 mm damit überbrücken.

Die beiden Hohlkörperteile des wannenartigen Trageelementes werden nach dem Zusammenstecken der Hohlkörperteilbereiche auf einen mit der Profilschiene verbundenen Auslegerarm aufgelegt und durch Auseinanderziehen in Längsrichtung an die Regeleinbaulänge angepaßt. Dadurch wird die Montage der Muffentragewanne erheblich vereinfacht. Nach der Anpassung an die Regeleinbaulänge werden über die Feststellschrauben in der Schlitzöffnung die beiden Hohlkörperteile so gegeneinander verpreßt, daß diese nicht mehr verschiebbar sind.

Beim Zusammenschieben der beiden Hohlkörperteile über die jeweiligen Hohlkörperteilbereiche hat es sich als vorteilhaft erwiesen, daß der querschnittsgrößere Hohlkörperteilbereich des einen Hohlkörperteils an seinem freien Ende zur Aufnahme des querschnittskleineren Hohlkörperteilbereichs des anderen Hohlkörperteils geöffnet ist. Der querschnittskleinere Hohlkörperteilbereich kann dabei aus Festigkeitsgründen an seinem freien Ende geschlossen sein.

Das den Hohlkörperteilbereichen gegenüberliegende freie Ende jedes Hohlkörperteils weist zweckmäßigerweise eine Aufnahme für den formschlüssigen Eingriff des zugeordneten Randes des Auslegerarms auf. Hierbei kann diese Aufnahme eine nutenförmige Einschnürung sein.

Die neuerungsgemäße Muffentragewanne kann in beliebiger Anzahl nebeneinander auf den Auslegerarmen angeordnet werden. Eine Begrenzung ist hier nur in der Länge der Auslegerarme gegeben. Die Muffentragewanne kann auch beim vorhandensein mehrerer Auslegerarme in einer Mehrzahl hintereinander angeordnet werden, um so den Tragebereich zu verlängern.

In der Zeichnung sind Ausführungsbeispiele der neuerungsgemäßen Muffentragewanne schematisch dargestellt; es zeigt:
Fig.1 eine perspektivische Darstellung der Muffentragewanne.
Fig.2 eine Seitenansicht der Muffentragewanne mit Anordnung in den Auslegearmen.
Fig.3 eine Draufsicht auf zwei nebeneinander angeordnete Muffentragewannen.

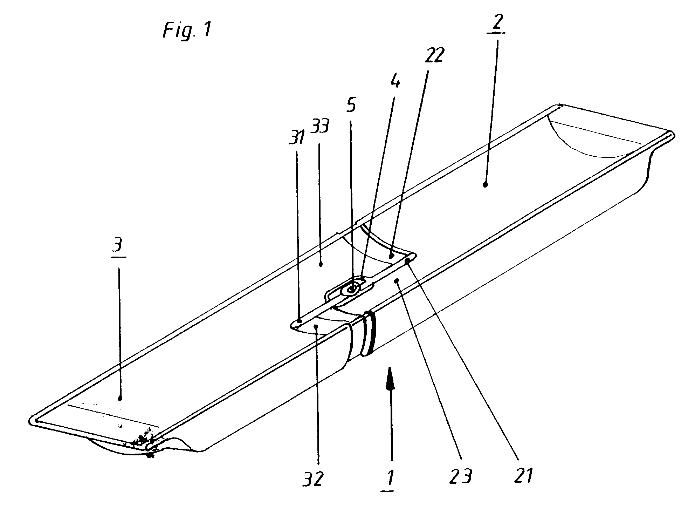

Das in Fig.1 dargestellte wannenartige Trageelement 1 besteht aus den beiden Hohlkörperteilen 2, 3. Die beiden Hohlkörperteile 2, 3 sind durch die axial verlaufende Mitteltrennung 21, 31 in jeweils zwei Hohlkörperteilbereiche 22, 23, 32, 33 geteilt. Hierbei sind die Hohlkörperteilbereiche 22, 32 die querschnittskleineren und die Hohlkörperteilbereiche 23, 33 die querschnittsgrößeren Bereiche. Die perspektivische Darstellung in Fig.1 zeigt den querschnittskleineren Hohlkörperteilbereich 22 eingeschoben in den querschnittsgrößeren Hohlkörperteilbereich 33 und - synonym - den querschnittskleineren Hohlkörperteilbereich 32 eingeschoben in den querschnittsgrößeren Hohlkörperteilbereich 23.

In die axial verlaufende Mitteltrennung 21, 31 ist jeweils die Schlitzöffnung 4 eingebracht, in welcher die Feststellschraube 5 die beiden Hohlkörperteile 2, 3 in ihrer eingestellten Lage fixiert.

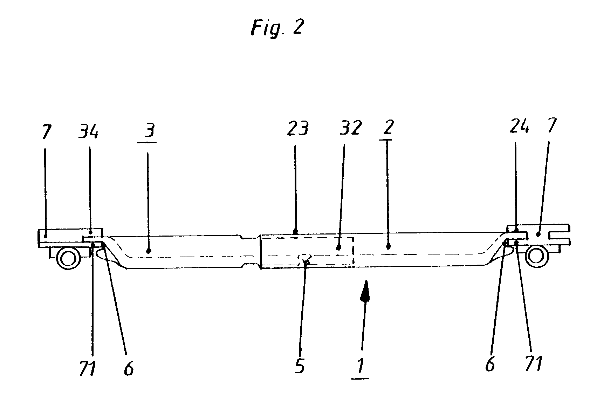

Fig.2 zeigt das wannenartige Trageelement 1 in der Seitenansicht. Die Hohlkörperteile 2, 3 sind mit ihren Hohlkörperteilbereichen 22, 23, 32, 33 - wie in Fig. 1 gezeigt und beschrieben - ineinandergeschoben. Die gestrichelte Linie zeigt den Einschub des querschnittskleineren Hohlkörperteilbereichs 32 in den querschnittsgrößeren Hohlkörperteilbereich 23.

Die Feststellschraube 5 ist ebenfalls gestrichelt angedeutet.

An den freien Enden 24, 34 der Hohlkörperteile 2, 3 sind die Aufnahmen 6 angeformt, die in der gezeigten Darstellung nutenförmige Einschnürungen sind. In die Aufnahmen 6 sind die Ränder 71 des Auslegerarms 7 eingebracht.

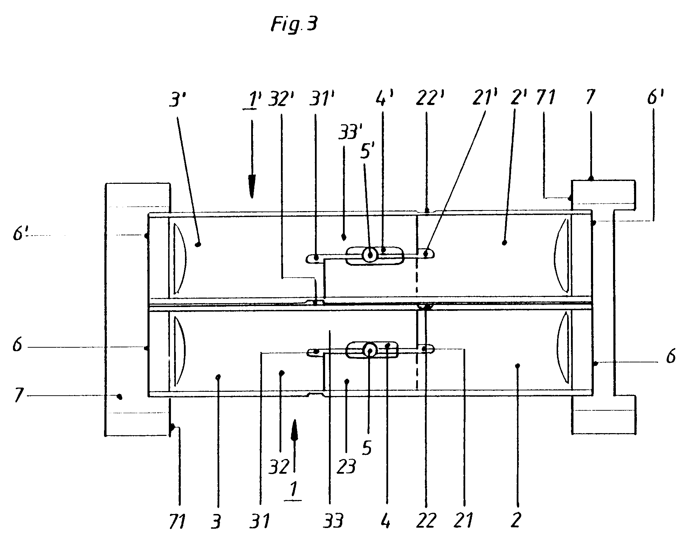

Die Draufsicht aus Fig.3 zeigt zwei nebeneinander angeordnete wannenartige Trageelemente 1,1' entsprechend Fig.2 mit der Aufnahme 6 über den Rändern 71 des Auslegerarms 7. Die Hohlkörperteile 2, 2', 3, 3' sind mit ihren Hohlkörperteilbereichen 22, 23, 32, 33, 22', 23' und 32', 33' wie in Fig.2 zusammengeschoben.

Über die Mitteltrennung 21, 31, 21', 31' ist die Schlitzöffnung 4, 4' ausgeformt und in dieser Schlitzöffnung 4, 4' die Feststellschraube 5, 5' angeordnet.

## Patentansprüche

1. Vorrichtung zum Tragen von Muffen für Kabel oder Leitungen, insbesondere für Muffen zur Verbindung von Glasfaserkabeln oder -leitungen, wobei an lotrecht angeordneten Profilschienen senkrecht davon abragende Auslegerarme befestigt sind und wobei die Kabelmuffen auf wannenartigen Trageelementen abgelegt sind, welche sich an den Auslegerarmen abstützen, dadurch gekennzeichnet, daß das wannenartige Trageelement (1) aus zwei gleichen Hohlkörperteilen, (2, 3) aus Kunststoff besteht, welche an jeweils einem freien Ende durch axial verlaufende Mitteltrennung (21, 31) in zwei Hohlkörperteilbereiche (22, 23, 32, 33) definierter Länge und unterschiedlichen Querschnitts geteilt sind, daß der querschnittsgrößere Hohlkörperteilbereich (23, 33) in seinen lichten Abmessungen wenigstens den Außenabmessungen des querschnittskleineren Hohlkörperteilbereichs (22, 32) entspricht, und daß in die Mitteltrennung (21, 31) zwischen den beiden Hohlkörperteilbereichen (22, 23, 32, 33) eine von oben nach unten durchgehend verlaufende Schlitzöffnung (4) eingebracht ist, in welcher eine Feststellschraube (5) zur Festlegung zweier Hohlkörperteile (2, 3) aufeinander angeordnet ist.

2. Vorrichtung nach Anspruch 1, dadurch gekennzeichnet, daß wenigstens der querschnittsgrößere Hohlkörperteilbereich (23) des einen Hohlkörpers (2) an seinem freien Ende zur Aufnahme des querschnittskleineren Körperteilbereichs (32) des anderen Hohlkörperteils (3) geöffnet ist.

3. Vorrichtung nach Anspruch 1 dadurch gekennzeichnet, daß das den Hohlkörperteilbereichen (22, 23, 32, 33) gegenüberliegende freie Ende jedes Hohlkörperteils (2, 3) eine Aufnahme (6) für den formschlüssigen Eingriff des zugeordneten Randes (71) des Auslegerarms (7) aufweist.

4. Vorrichtung nach Anspruch 3, dadurch gekennzeichnet, daß die Aufnahme (6) eine nutenförmige Einschnürung ist.
